Europäisches Patentamt

(19) European Patent Office

Office européen des brevets

(11) Numéro de publication: **0 123 633**
**A1**

(12) # DEMANDE DE BREVET EUROPEEN

(21) Numéro de dépôt: **84420055.0**

(22) Date de dépôt: **22.03.84**

(51) Int. Cl.³: **B 60 P 3/32**

(30) Priorité: **22.03.83 FR 8305009**

(43) Date de publication de la demande:
**31.10.84 Bulletin 84/44**

(84) Etats contractants désignés:
**AT BE CH DE FR GB LI**

(71) Demandeur: **"LE PLASTIQUE ARME" Société Anonyme
Zone Industrielle Galinay
F-42230 Roche la Moliere(FR)**

(72) Inventeur: **Olivo, Jean
Clos Grangette
F-42230 Roche la Moliere(FR)**

(74) Mandataire: **Perrier, Jean-Pierre et al,
Cabinet GERMAIN & MAUREAU 12 rue de la République
F-42000 St-Etienne(FR)**

(54) **Mécanisme pour caisson télescopique de véhicule.**

㉗ Ce mécanisme s'interpose entre la partie sous-jacente du véhicule et, par exemple, un plancher (4) lié à la partie avant du toit du véhicule et un caisson mobile (3) coiffant un caisson de toit fixe (2b).

Il comprend de chaque côté du véhicule des faces longitudinales et superposées de roulement (41a-42a) faisant corps avec le caisson (3) et est apte à coopérer avec des galets espacés (43-44) montés libres en rotation autour d'axes horizontaux solidaires de la partie supérieure fixe du véhicule. Ces faces de roulement sont associées d'une part, à des rampes de soulèvement (52) et d'abaissement (53) du caisson mobile et d'autre part, à des moyens de calage du caisson en position abaissée.

FIG.7

EP 0 123 633 A1

Croydon Printing Company Ltd.

1

"Mécanisme pour caisson télescopique de véhicule".

L'invention est relative à un mécanisme pour caisson télescopique de véhicule.

Pour augmenter la capacité d'un véhicule sans pour autant perturber son aérodynamisme, il est connu de le munir, au moins dans sa partie avant, d'un caisson mobile longitudinalement par rapport à une structure fixe. Il en est ainsi des capucines qui, de camping-car ou de tracteur routier, peuvent occuper une position rentrée dans laquelle elles ne perturbent pas l'aérodynamisme, et une position déployée dans laquelle elles font saillie de l'avant du véhicule, à l'arrêt, et augmentent le volume utilisable pour permettre le couchage.

Dans la demande de brevet français 82.09072 du 18 mai 1982, au nom du déposant, le caisson mobile est relié à la structure fixe par l'intermédiaire de glissières télescopiques en plusieurs éléments associés à des moyens complémentaires leur communiquant des mouvements verticaux en début et fin de course, de manière à décaler verticalement de leur portée les joints dont est munie la partie inférieure du caisson.

En raison du recours à des glissières télescopiques, la capacité d'extension du caisson est limitée.

En outre, pour améliorer le coulissement, il est d'usage d'utiliser des glissières dont les éléments télescopiques sont en contact par des billes. Or, l'expérience montre que de telles glissières peuvent être détériorées par des mouvements de torsion ou de flexion permettant aux billes de sortir de leur logement et perturbant le coulissement.

La présente invention a pour but de remédier à ces inconvénients en fournissant un mécanisme simple, fiable et permettant de donner au caisson mobile une plus grande capacité d'extension, capacité pouvant être parfaitement adaptée aux besoins.

Ce mécanisme s'interpose entre un caisson mobile coiffant la partie supérieure du véhicule et un plancher rapporté sur la partie sous-jacente de ce véhicule.

Selon l'invention, ce mécanisme comprend de chaque côté du véhicule des faces longitudinales et superposées de roulement, faisant corps avec le caisson mobile et aptes à coopérer avec des galets espacés, de guidage et de verrouillage montés libres en rotation autour d'axes horizontaux solidaires de la partie supérieure fixe du véhicule, ces faces de roulement étant associées, d'une part, à des rampes de soulèvement et d'abaissement du caisson mobile et d'autre part, à des moyens de calage du caisson en position abaissée.

Le recours à des faces de roulement longitudinales continues et à des galets liés au châssis du véhicule améliore la rigidité de l'ensemble du mécanisme et permet d'obtenir une course de déploiement bien supérieure à celle obtenue avec des glissières télescopiques.

Dans une forme d'exécution de l'invention, le mécanisme comprend, de chaque côté du véhicule, d'une part, une glissière longitudinale continue liée au caisson mobile et dont les faces inférieure et supérieure constituent chemins de roulement, d'autre part, un boitier fixe rapporté sur la partie fixe sous-jacente du véhicule et portant, à chacune de ses extrémités, deux galets respectivement inférieur de guidage et supérieur de verrouillage, les galets de l'extrémité antérieure étant disposés de manière à prendre appui sur le bord extérieur de la glissière, tandis que ceux de l'extrémité postérieure sont disposés de manière à prendre appui sur le bord intérieur de la même glissière et, de plus, sur chaque glissière, deux ensembles de soulèvement et de calage espacés longitudinalement et aptes chacun à coopérer avec les galets supérieurs de verrouillage et avec ceux inférieurs de guidage.

Dans une autre forme d'exécution simplifiée, les faces de roulement sont constituées par les faces latérales de rainures longitudinales qui, ménagées dans les flancs du caisson mobile et débouchant à l'intérieur de celui-ci, sont munies d'extrémités coudées vers le haut et dont les faces latérales constituent rampes de soulèvement et d'abaissement et moyens de calage du caisson mobile.

D'autres caractéristiques et avantages ressortiront de la description qui suit, en référence au dessin schématique annexé, représentant à titre d'exemples non limitatifs, deux formes d'exécution de ce caisson mobile dans le cas de son application à la constitution d'une capucine avant de camping-car.

Figure 1 est une vue de côté en élévation du camping-car,

Figure 2 est une vue en perspective montrant les éléments essentiels d'une première forme d'exécution du mécanisme de déploiement,

3

Figure 3 est une vue en bout, avec coupe partielle, montrant à échelle agrandie la disposition relative des éléments du mécanisme de figure 2,

Figures 4, 5 et 6 sont des vues schématiques de côté illustrant le fonctionnement du mécanisme,

Figure 7 est une vue partielle en perspective montrant une autre forme d'exécution du mécanisme,

Figure 8 est une vue en coupe suivant 8-8 de figure 7,

Figures 9, 10 et 11 sont des vues schématiques de côté illustrant le fonctionnement du mécanisme.

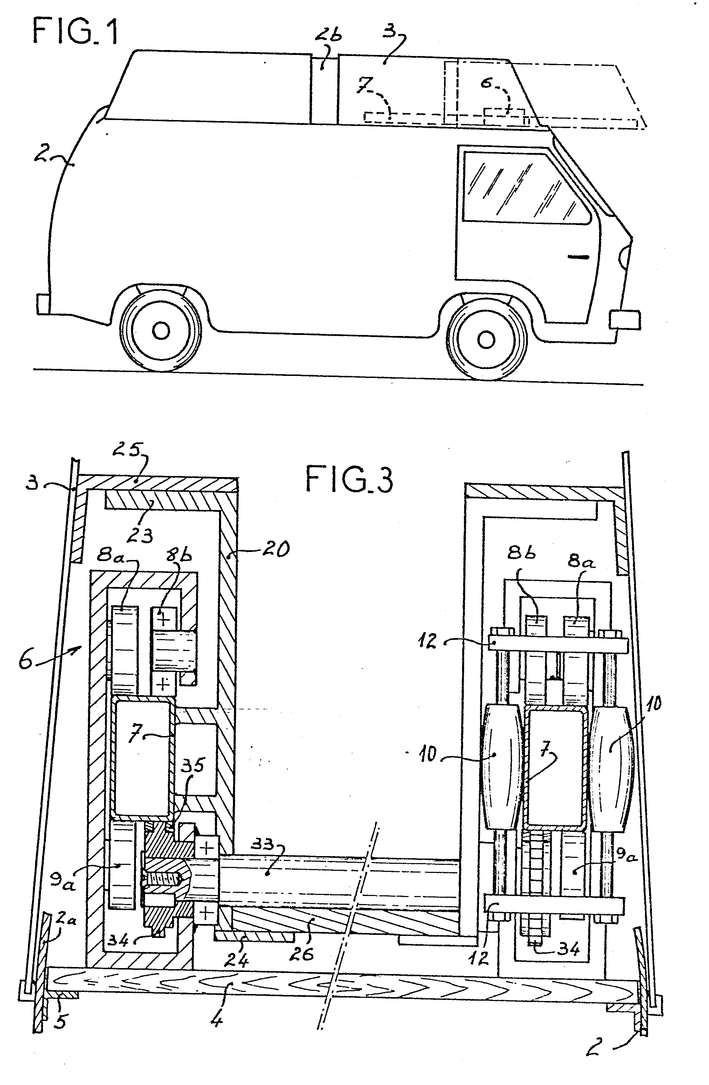

A la figure 1, (2) désigne un camping-car muni, sur sa partie avant, d'une capucine télescopique (3).

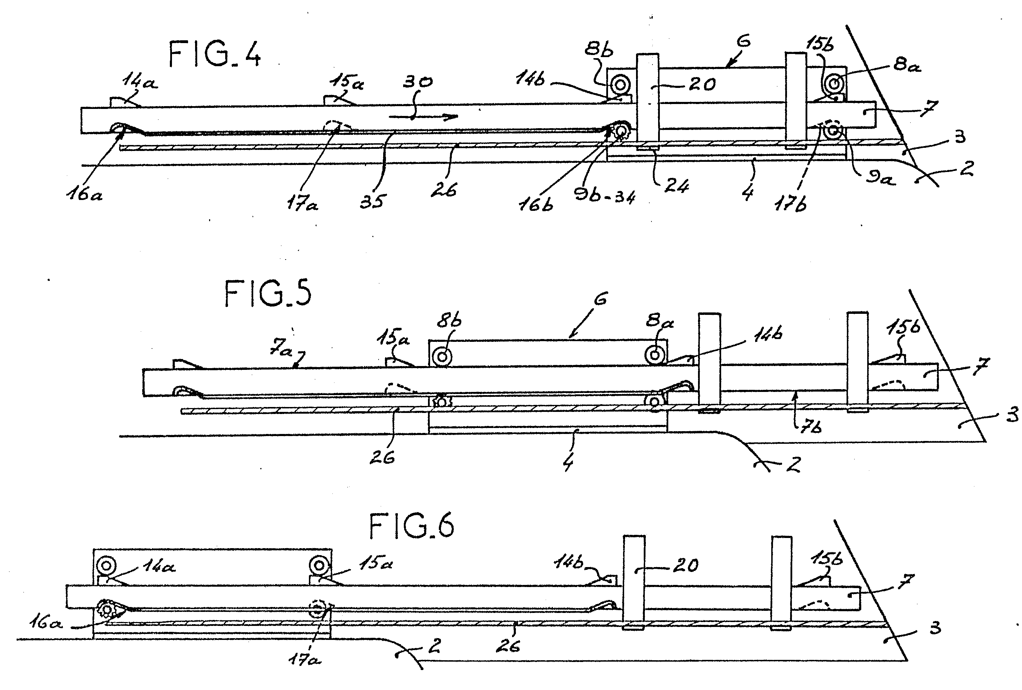

Comme montré plus en détail à la figure 3, dans sa partie supérieure et sur l'avant, le camping-car reçoit un plancher fixe (4) lié à ses parois latérales, par exemple par des retours coudés (5). Le caisson (3) coiffe les extrémités latérales supérieures (2a) des parois du véhicule.

Le mécanisme, contrôlant et guidant le déplacement du caisson mobile, est composé de deux boîtiers (6), fixés latéralement sur le plancher fixe (4), et de deux glissières (7) coulissant dans ces boîtiers.

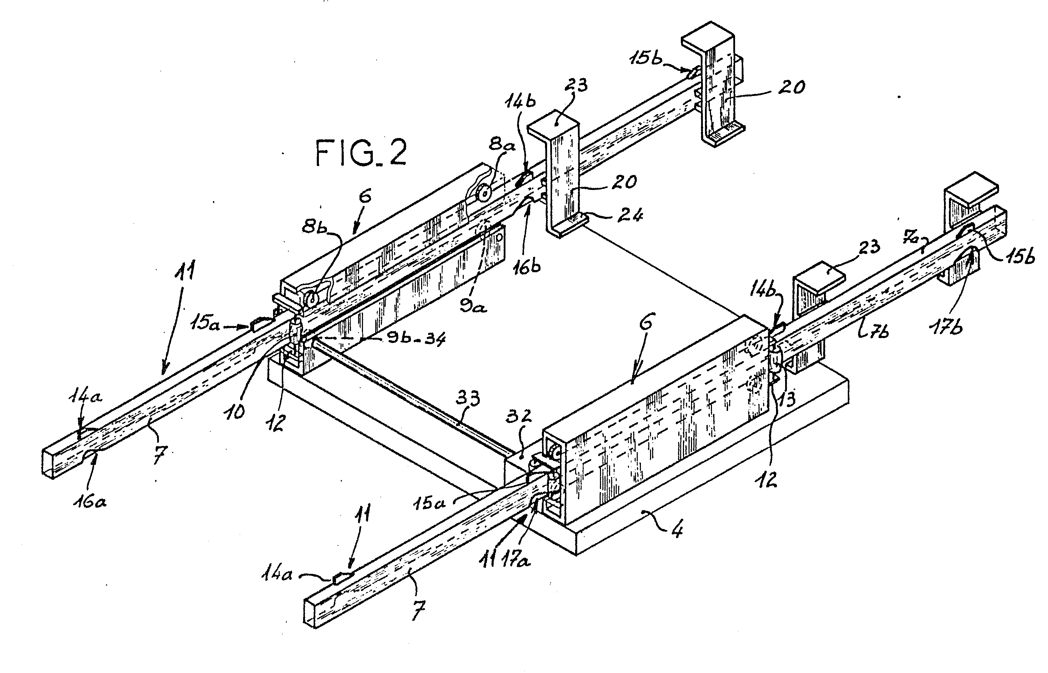

Comme montré plus en détails aux figures 2 et 3, chaque boîtier présente, en section transversale, la forme générale d'un "C" dont l'ouverture est dirigée vers l'intérieur du véhicule. A son extrémité avant, il porte deux galets montés libres en rotation autour d'un axe horizontal, à savoir : un galet supérieur de verrouillage (8a) et un galet inférieur de guidage (9a). Ces deux galets sont disposés à proximité de l'âme du boîtier (6), de manière à prendre appui sur les bords extérieurs des faces de roulement respectivement supérieure et inférieure, de la glissière correspondante. A son extrémité postérieure, le boîtier supporte deux autres galets, respectivement supérieur de verrouillage (8b) et inférieur de guidage (9b). Ces deux galets sont disposés à proximité des retours intérieurs du boîtier et de manière à prendre appui sur le bord intérieur des faces de roulement respectivement supérieure et inférieure, de la glissière.

(7a)          (7b)

Ce boîtier comporte également, à son extrémité intérieure, une paire de rouleaux de guidage (10) qui, venant en contact contre les

4

parois latérales de la glissière (7) correspondante, sont montés libres en rotation autour d'axes verticaux portés par des pattes (12) solidaire du boîtier.

Un autre rouleau de guidage (13), venant en contact contre la face extérieure latérale de la glissière, est disposé à l'extrémité antérieure de chaque boîtier.

Chacune des glissières porte deux ensembles de soulèvement et de calage (11), ensembles qui, dans cette forme d'exécution, sont disposés à proximité de chacune de ses extrémités. Chacun de ces ensembles est composé de deux rampes (14a-15a) et (14a-15b) qui font saillie de la partie supérieure de la glissière. Les rampes (14a-14b) sont disposées sur le côté intérieur de la glissière, tandis que les rampes (15a-15b) sont disposées sur le côté extérieur, de manière à coopérer, les premières avec le galet (8b), et les secondes avec le galet (8a). Les rampes (14a) et (15a), de même que celles (14b) et (15b), sont décalées longitudinalement sur la glissière, de manière à venir en contact simultanément avec leur galet respectif (8b-8a). Chacune de ces rampes est associée à un logement sous-jacent (16a-17a), (16b-17b), débouchant de la face inférieure de la glissière et, latéralement, vers l'intérieur pour les logements (16a-16b), et vers l'extérieur, pour les logements (17a-17b). Le fond de chacun de ces logements constitue rampe de roulement et logement de calage pour les galets inférieurs (9b-9a) du boîtier.

Enfin, chaque glissière est munie, à proximité de son extrémité antérieure, de deux ferrures verticales espacées (20), fixées contre sa face intérieure et comportant chacune un retour coudé supérieur (23) tourné vers l'extérieur, et un retour coudé inférieur (24) tourné vers l'intérieur. Les retours (23) sont destinés à coopérer avec des équerres de fixation (25) solidaires du caisson mobile (3), comme montré à la figure 3, tandis que les retours coudés inférieurs (4) sont destinés à supporter le plancher mobile (26). Comme montré à la figure 4, lorsque la capucine (3) est en position rétractée, les fonds des logements (16b-17b) sont appliqués contre les galets inférieurs (9b-9a) par l'intermédiaire des rampes (14a-15b) coopérant avec les galets (8b-8a).

Lorsque la glissière est déplacée dans le sens de la flèche (30) de figure 4, les rampes des logements (16b-17b) coopèrent avec les galets (9b) et (9a) pour déplacer verticalement la glissière. Ce mouvement de soulèvement est rendu possible par les rampes (14b-15b) qui échappent progressivement des galets supérieurs (8b-8a).

Il est rappelé que ce soulèvement vertical est nécessaire pour décaler, de leur surface de contact, les joints assurant l'étanchéité de la capucine par rapport au reste du véhicule et réduire ainsi les frottements.

Dès que les deux glissières sont en position surélevée, elles peuvent coulisser librement entre les galets comme montré à la figure 5.

En fin de course, les rampes supérieures (14a-15a) rencontrent les galets supérieurs de verrouillage (8b-8a), ce qui provoque l'abaissement des glissières et leur verrouillage en position par engagement des logements (16a-17a) sur les galets (9b-9a).

Lorsque la capucine est en position déployée et verrouillée, comme montré à la figure 6, bien qu'en porte-à-faux, elle est parfaitement maintenue par l'engagement des glissières dans les boîtiers, et peut ainsi se passer de montants de soutien s'interposant entre son extrémité et le sol.

De manière à faciliter les déplacements de la capucine et réduire l'effort humain, le mécanisme est associé à des moyens moteurs commandant le déplacement des glissières. Dans la forme d'exécution, ces moyens sont constitués par un boîtier moteur (32) qui, disposé contre l'un des boîtiers (6) du mécanisme, est relié avec interposition de moyens débrayables à un arbre transversal (33) monté libre en rotation dans les deux boîtiers (6) et portant, calées à chacune de ses extrémités, une roue dentée (34), visible plus particulièrement à la figure 3. Chacune de ces roues dentées engrène avec une crémaillière (35) disposée sous la glissière (7) correspondante et allant du logement (16a) au logement (16b). Le noyau de chacune de ces roues dentées, qui correspond au diamètre à fond de dents de la denture, remplit les mêmes fonctions que celles des galets (9b) décrits précédemment.

Le boîtier motorisé (32) peut également être remplacé par un autre boîtier comportant des pignons coniques de renvoi permettant d'entrainer en rotation l'arbre (33) par une manivelle ou un moteur portatif à piles.

6

Aux figures 4 à 6, le plancher mobile est représenté comme continu, mais il est évident qu'il peut également être composé de plusieurs éléments télescopiques s'empilant et se déployant en fonction des mouvements des glissières.

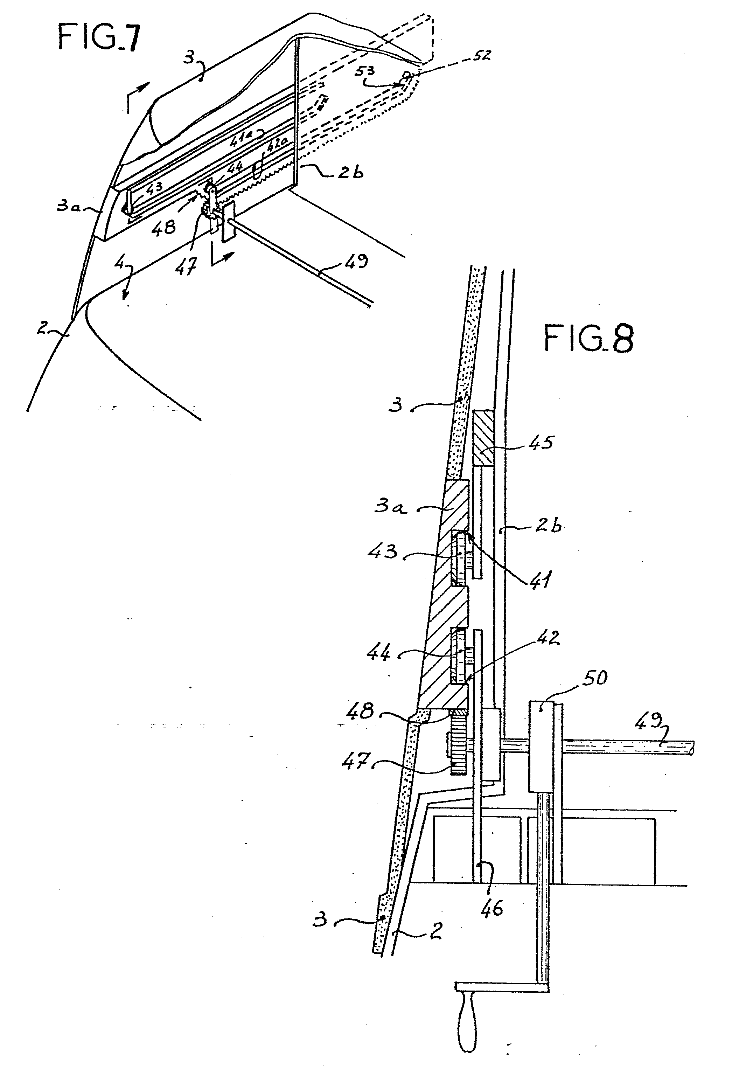

La forme d'exécution représentée aux figures 7 à 11 se différencie de la précédente par la forme des chemins de roulement et des galets de guidage et de verrouillage. En effet, comme montré sur ces figures et pour chaque côté du caisson mobile (3), les faces de roulement sont constituées par les faces latérales (41a) et (42a) de rainures longitudinales (41-42) ménagées dans les flancs du caisson mobile (3). Plus précisément, ces rainures qui débouchent en direction de l'intérieur sont réalisées dans un renfort (3a) du caisson mobile (3). Chacune de ces rainures est munie, à ses extrémités, de parties coudées vers le haut respectivement antérieure (41b-42b) et postérieure (41c-42c). La rainure supérieure (41) est décalée vers l'avant de manière que son extrémité coudée (41b) soit à proximité de l'extrémité supérieure de la partie sous-jacente du véhicule et, en l'occurence, du plancher (4). Ces deux rainures sont destinées à coopérer avec deux galets respectivement (43) et (44) montés libres en rotation autour d'axes horizontaux. Le galet (43) est porté par une potence (45) dont l'extrémité postérieure est fixée sur la partie extérieure de la partie fixe (2b) du toit. Quant au galet (44), il est monté libre en rotation à l'extrémité d'un support vertical (46) fixé sur la partie sous-jacente du véhicule, donc au plancher (4).

Les parties coudées (41b-42b) et (41c-42c) constituent par leurs faces latérales supérieures, rampes d'élévation (52) et par leurs faces latérales inférieures, rampes d'abaissement (53). Elles constituent aussi organe de calage du coussin.

Le mouvement de translation de la capucine peut être réalisé manuellement bien que, de préférence, il soit réalisé au moyen de deux roues dentées (47) coopérant avec des crémaillères (48) rapportées au dessous des rainures inférieures (42). Les deux roues dentées (47) sont calées aux extrémités d'un arbre transversal (49) relié à des moyens d'entrainement en rotation comprenant un moteur électrique ou un organe d'actionnement manuel (50), comme représenté à la figure 8.

7

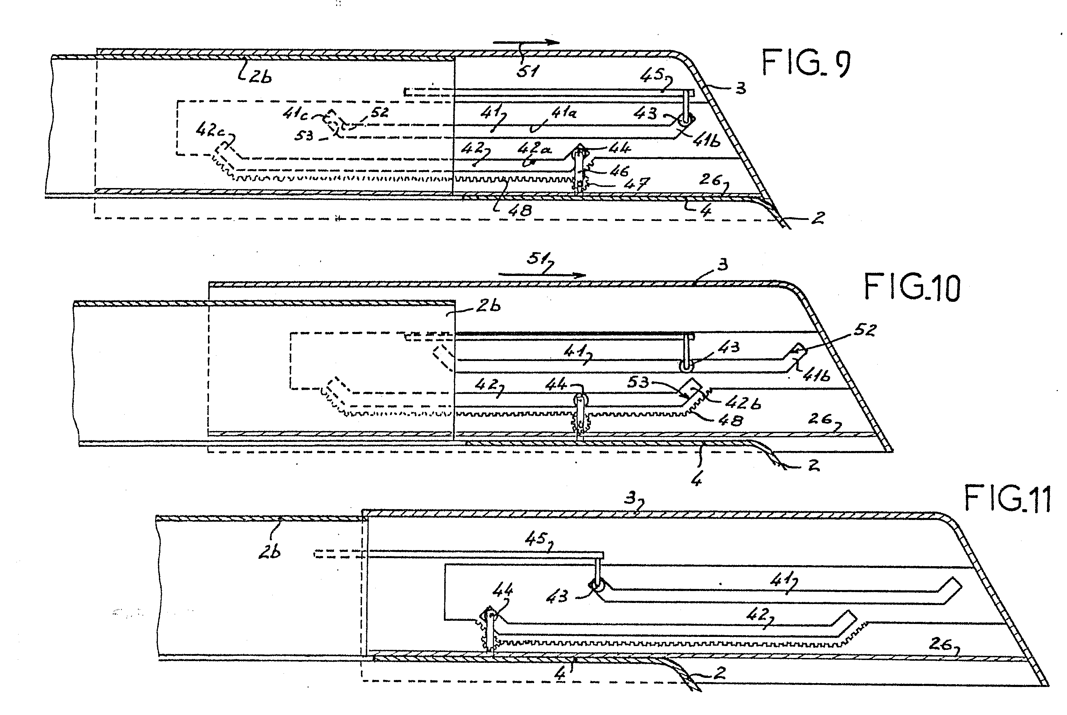

La capucine étant en position rétractée au dessus du véhicule, comme montré à la figure 9, son déplacement en translation dans le sens de la flèche 51 s'accompagne immédiatement d'un mouvement d'élévation vers le haut grâce aux galets (43) et (44) venant en contact avec les rampes d'élévation (52) des parties coudées antérieures (41b) et (42b) des rainures.

Dès que les galets sont dans les parties rectilignes et horizontales des rainures, comme montré à la figure 10, le déplacement du caisson est facilité et s'effectue sans aucun effort. En fin de mouvement, les galets (43) et (44) rencontrent les rampes d'abaissement (53) des parties coudées postérieures (41c-42c) des rainures qui obligent l'ensemble du caisson à venir reposer à nouveau sur les parties sous-jacentes fixes du véhicule (2). Il est évident que, lors du mouvement de rétraction du caisson, les mouvements d'élévation et d'abaissement de ce dernier, sont commandés respectivement par les rampes d'élévation (52) des parties coudées postérieures (41c) et (42c) puis par les rampes d'abaissement (53) des parties coudées antérieures (41b-42b).

Ce mécanisme, bien simplifié par rapport à celui de la forme d'exécution précédente, et donnant la même rigidité à la capucine dans ses deux positions rétractées et déployées, occupe un encombrement réduit. Plus précisément, ce mécanisme, qui se loge totalement dans l'intervalle entre le caisson mobile et la partie fixe du toit dégage totalement la surface habitable du caisson mobile.

8

REVENDICATIONS

1. Mécanisme pour caisson télescopique de véhicule, du type s'interposant entre la partie sous-jacente du véhicule et un caisson mobile (3) coiffant la partie supérieure de ce véhicule caractérisé en ce qu'il comprend, de chaque côté du véhicule, des faces longitudinales et superposées de roulement (7a-7b-41a-42a), faisant corps avec le caisson mobile (3) et aptes à coopérer avec des galets (8a-8b-9a-9b-43-44) espacés, de guidage et de verrouillage, montés libres en rotation autour d'axes horizontaux solidaires de la partie supérieure fixe du véhicule, ces faces de roulement étant associées, d'une part, à des rampes (14a-15a-52-53) de soulèvement et d'abaissement du caisson mobile et d'autre part, à des moyens de calage du caisson en position abaissée (16a-16b-41b-41c).

2. Mécanisme selon la revendication 1 caractérisé en ce qu'il comprend également des moyens (34-35-47-48) d'entrainement en translation du caisson mobile.

3. Mécanisme selon l'une quelconque des revendications 1 et 2 caractérisé en ce qu'il comprend, de chaque côté du véhicule, d'une part, une glissière longitudinale continue (7) liée au caisson mobile (3) et dont les faces inférieure et supérieure constituent chemins de roulement, d'autre part, un boîtier fixe (6) rapporté sur la partie fixe sous-jacente du véhicule et portant, à chacune de ses extrémités, deux galets respectivement inférieur de guidage (9a-9b) et supérieur de verrouillage (8a-8b), les galets (8a-9a) de l'extrémité antérieure étant disposés de manière à prendre appui sur le bord extérieur de la glissière (7), tandis que ceux (8b-9b) de l'extrémité postérieure sont disposés de manière à prendre appui sur le bord intérieur de la même glissière (7) et, de plus, sur chaque glissière (7), deux ensembles (11) de soulèvement et de calage espacés longitudinalement et aptes chacun à coopérer avec les galets supérieurs (8a-8b) de verrouillage et avec ceux inférieurs (9a-9b) de guidage.

4. Mécanisme selon la revendication 3 caractérisé en ce que chaque ensemble (11) de soulèvement et de calage est composé de deux rampes d'abaissement (14a-15a) qui, saillant de la partie supérieure de la glissière (7), sont décalées transversalement et longitudinalement, sont aptes à coopérer simultanément avec les deux galets supérieur de verrouillage (8a-8b) et sont associées chacune à un logement sous-jacent (16a-16b), débouchant de la face inférieure de la glissière (7) et dont le fond, formant rampe de soulèvement et organe de calage, est apte à coopérer avec l'un des galets de guidage (9a-9b) du boîtier (6).

5. Mécanisme selon l'ensemble des revendications 1 et 2 et l'une quelconque des revendications 3 et 4, caractérisé en ce que l'un des galets inférieurs de guidage (9b) de chaque boîtier (6) est constitué par le noyau d'une roue dentée (34) qui, s'engrenant avec une crémaillère ménagée (35) longitudinalement sous la glissière (7) correspondante, et calée sur un arbre transversal (33) monté libre en rotation dans les boîtiers (6), est lié en rotation à des moyens d'entrainement en rotation (32).

6. Mécanisme selon l'une quelconque des revendications 1 à 5, caractérisé en ce que chacune des deux glissières (7) est munie, à son extrémité libre antérieure, de ferrure verticale (20) fixée contre sa face intérieure, et comportant chacune un retour coudé supérieur (23) tourné vers l'extérieur pour la fixation du caisson mobile (3); et un retour coudé inférieur (24) tourné vers l'intérieur pour la fixation d'un plancher mobile (26).

7. Mécanisme selon la revendication 1 et l'une quelconque des revendications 2 à 6 caractérisé en ce que chacune des glissières (7) est guidée transversalement dans son boîtier (6) par au moins trois rouleaux verticaux en contact avec ses parois latérales, deux de ces rouleaux (10) étant disposés à l'une des extrémités du boîtier (6) de part et d'autre de cette glissière (7), tandis que le troisième rouleau (13) est disposé à l'autre extrémité du boîtier (6).

8. Mécanisme selon l'une quelconque des revendications 1 et 2 caractérisé en ce que les faces de roulement (41a-42a) sont constituées par les faces latérales de rainures longitudinales (41-42) qui, ménagées dans les flancs (3a) du caisson mobile (3) et débouchant à l'intérieur de celui-ci, sont munies d'extrémités coudées vers le haut (41b-41c-42b-42c) et dont les faces latérales constituent rampes de soulèvement (52) et d'abaissement (53) et moyens de calage du caisson mobile.

9. Mécanisme selon la revendication 8 caractérisé en ce que les rainures sont au nombre de deux et coopèrent, celle supérieure (41) avec un galet (43), porté par une potence (45) solidaire du caisson de toit fixe (2b), et celle inférieure (42) avec un autre galet (44)

10

porté par un support vertical (46) lié à la partie sous-jacente fixe du véhicule.

10. Mécanisme selon l'ensemble des revendications 8 et 9 caractérisé en ce que la rainure supérieure (41) est décalée longitudinalement sur l'avant de manière que son extrémité coudée antérieure (41b) soit à proximité de l'extrémité antérieure de la partie sous-jacente fixe du véhicule (2).

FIG.1

FIG.3

0123633

FIG_2

FIG. 4

14a  15a  30  8b  6  15b  8a

14b  20  7

16a  17a  35  26  16b  9b-34  24  4  17b  9a  2  3

FIG. 5

6

7a  15a  8b  8a  14b  15b  7

26  4  76  2  3

FIG. 6

14a  15a  14b  20  15b  7

16a  17a  2  26  3

FIG.7

FIG.8

FIG. 9

FIG. 10

FIG. 11

0123633

Office européen
des brevets

**RAPPORT DE RECHERCHE EUROPEENNE**

**0123633**

Numéro de la demande

EP  84 42 0055

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| A | FR-A-2 425 366 (BERNHARDT) <br> * Page 3, ligne 40 - page 4, ligne 24; figures 1-4 * | 1 | B 60 P    3/32 |
| A | FR-A-1 129 556 (ETS DEPLIREX) <br> * Page 2, ligne 34 - page 3, ligne 49; page 3, lignes 65-73; figures 1-4, 8 * | 1-3,5 | |
| A | FR-A-2 359 009 (WESTFALIA) <br> * Figures 1, 2 * | 4 | |
| D,P <br> A | FR-A-2 527 157 (OLIVO) | | |
| A | US-A-3 897 100 (GARDNER) | | DOMAINES TECHNIQUES RECHERCHES (Int. Cl. 3) |
| A | US-A-2 976 078 (MAIDL) | | B 60 P    3/00 |
| A | DE-A-2 026 360 (JÜRGENS) | | |
| A | DE-U-7 335 670 (WESTFALIA) | | |

Le présent rapport de recherche a été établi pour toutes les revendications

| Lieu de la recherche | Date d'achèvement de la recherche | Examinateur |
|---|---|---|
| BERLIN | 07-06-1984 | LUDWIG H J |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

 

& : membre de la même famille, document correspondant

OEB Form 1503 03 82